# EUROPÄISCHE PATENTSCHRIFT

(11) **EP 1 367 256 B1**
(45) Veröffentlichungstag und Bekanntmachung des Hinweises auf die Patenterteilung: **18.04.2007**
(21) Anmeldenummer: 02100492.4
(22) Anmeldetag: 14.05.2002
(51) Int. Cl.: F02N 17/00, F02D 41/06, F02D 33/02, F02N 15/00, F02M 23/00, F02N 11/08, F02D 13/02, F02D 21/08, F02D 35/00, F01N 3/30, F01L 1/34

(54) **Verfahren zur Vorbereitung des Anlassens einer Brennkraftmaschine**
Method for preparing an internal combustion engine to start
Méthode pour préparer un moteur a combustion au démarrage

(43) Veröffentlichungstag der Anmeldung: 03.12.2003
(73) Patentinhaber: Ford Global Technologies, LLC, Dearborn, MI 48126 (US)
(72) Erfinder: Kramer, Ulrich, 51427, Bergisch Gladbach (DE); Grieser, Klemens, 40764, Langenfeld (DE)
(74) Vertreter: Drömer, Hans-Carsten

(56) Entgegenhaltungen:
- EP-A- 1 074 713
- DE-A- 10 038 257
- DE-A- 10 039 948
- DE-A- 19 615 830
- DE-A- 19 848 368
- DE-A- 19 960 984
- DE-C- 19 735 455
- FR-A- 2 810 697
- GB-A- 2 368 144
- US-A- 3 867 919
- US-A- 5 761 904
- US-A- 5 803 040
- US-B1- 6 192 678
- US-B1- 6 195 985
- US-B1- 6 218 799
- US-B1- 6 276 317
- US-B2- 6 474 291

## Beschreibung

Die Erfindung betrifft ein Verfahren zur Vorbereitung des Anlassens einer Brennkraftmaschine, vorzugsweise einer Brennkraftmaschine mit Direkteinspritzung. Ferner betrifft die Erfindung eine zur Durchführung eines derartigen Verfahrens ausgebildete Brennkraftmaschine.

Zur Verbesserung der Kraftstoffausnutzung in Fahrzeugen mit Verbrennungsmotor wird häufig der Motor anstelle eines Leerlaufbetriebes vollständig abgestellt, wenn keine Antriebsleistung benötigt wird. Der Motor muß dann neu angelassen werden, wenn seine Leistung wieder benötigt wird. Für das Anlassen weisen herkömmliche Brennkraftmaschinen spezielle Einrichtungen wie etwa einen Anlassermotor oder einen als Motor einsetzbaren Generator (sogenannter Startergenerator) auf. Hierbei handelt es sich um verhältnismäßig große und kostenaufwendige Einrichtungen, da für das Anlassen des Verbrennungsmotors eine hohe elektrische Leistung erforderlich ist.

Darüber hinaus ist es bekannt, eine Brennkraftmaschine durch Auslösen einer Verbrennung anzulassen. Siehe zum Beispiel DE 100 39 948. Dies ist insbesondere bei Brennkraftmaschinen mit Funkenzündung und Direkteinspritzung möglich. Der direkt in die Brennkammer eingespritzte Kraftstoff wird dabei durch einen Funken gezündet, und die anschließende Explosion des Luft-Kraftstoff-Gemisches bewegt den Kolben und startet den Motor, ohne daß die Kurbelwelle durch eine zusätzliche Anlassereinrichtung bewegt werden müßte. Ein derartiges direktes Anlassen des Motors erfordert jedoch bestimmte Randbedingungen, um erfolgreich durchgeführt werden zu können. Insbesondere ist es erforderlich beziehungsweise vorteilhaft, daß die Kurbelwelle zu Beginn des Anlassens in oder nahe einer bestimmten Position steht. Dies ist bei herkömmlichen Brennkraftmaschinen in der Regel nicht gewährleistet, da die Kurbelwelle nach dem Abstellen und Auslaufen des Motors in zufälligen Positionen stehen bleibt.

Um eine Brennkraftmaschine für ein durch einen Verbrennungsvorgang initiiertes bzw. unterstütztes Anlassen vorzubereiten, sind aus dem Stand der Technik verschiedene Maßnahmen bekannt. So wird in der DE 100 24 438 A1 und der DE 198 08 472 A1 vorgeschlagen, vor dem Anlassen die Kurbelwelle von einem Elektromotor in eine bestimmte Position bringen zu lassen, aus der heraus das nachfolgende Anlassen des Verbrennungsmotors durch Verbrennungen bei verringerter Kompression und verringertem Füllgrad unterstützt werden kann. Um den Verbrennungsmotor in eine für das direkte Starten geeignete Position zu bringen, ist es ferner aus der DE 198 35 045 A1 neben der aktiven Drehung mittels eines Elektromotors bekannt, beim Abstellen die Kurbelwelle durch ein geeignetes Bremssystem in einer gewünschten Position anzuhalten. Als zusätzliche Maßnahme zur Vorbereitung einer geeigneten Position der Kurbelwelle wird weiterhin in der WO 01/48373 A1 vorgeschlagen, spezielle Zünd- und Einspritzimpulse vorzusehen. Über diese Impulse soll dabei sowohl ein definiertes Weiterdrehen des Verbrennungsmotors als auch dessen Abstoppen in einer bestimmten Position erreicht werden.

Vor diesem Hintergrund war es Aufgabe der vorliegenden Erfindung, ein Verfahren zur Vorbereitung des Anlassens einer Brennkraftmaschine bereitzustellen, welches insbesondere die Rahmenbedingungen für ein starterloses Anlassen verbessert.

Diese Aufgabe wird durch ein Verfahren mit den Merkmalen des Anspruchs 1 sowie ein Verfahren mit den Merkmalen des Anspruchs 7 gelöst.

Vorteilhafte Ausgestaltungen sind in den Unteransprüchen enthalten.

Gemäß einer ersten Ausgestaltung ist das Verfahren zur Vorbereitung des Anlassens einer Brennkraftmaschine dadurch gekennzeichnet, daß während des Auslaufens oder nach dem Auslaufen der Brennkraftmaschine über den herkömmlichen Umfang hinaus Abgas aus den Zylindern entfernt und/oder Frischluft in die Zylinder hinein gesaugt wird. Bei der Brennkraftmaschine handelt es sich vorzugsweise um eine Brennkraftmaschine mit Direkteinspritzung des Kraftstoffes in die Brennkammern.

Durch die forcierte Entfernung verbrannter Abgase aus den Zylindern beziehungsweise das forcierte Füllen der Zylinder mit Frischluft werden die Bedingungen für ein erneutes Starten der Brennkraftmaschine durch einen Verbrennungsvorgang erheblich verbessert. Durch das erfindungsgemäße Verfahren kann somit ein starterloses Anlassen der Brennkraftmaschine mit größerer Effizienz und Sicherheit erfolgen, und es wird weniger empfindlich gegenüber einem genauen Einhalten unterschiedlicher Randbedingungen.

Um den Zylindern verstärkt Frischluft zuzuführen, kann beispielsweise eine im Ansaugsystem der Brennkraftmaschine befindliche Drosselklappe während des Auslaufens der Brennkraftmaschine möglichst weit geöffnet werden. Vorzugsweise wird die Drosselklappe kurz vor dem endgültigen Stillstand der Brennkraftmaschine wieder geschlossen, um ein möglichst ruhiges Auslaufen des Motors zu gewährleisten.

Zusätzlich oder alternativ kann eine vermehrte Frischluftzufuhr auch dadurch erfolgen, daß ein mit den Zylindern gekoppelter Frischluftkanal vorgesehen wird, welcher beim Auslaufen der Brennkraftmaschine zum Einlaßsystem des Motors hin beziehungsweise zur Atmosphäre hin geöffnet wird.

Weiterhin kann in Brennkraftmaschinen mit variabler Ventilsteuerung beim Auslaufen der Brennkraftmaschine eine negativereVentilüberschneidung eingestellt werden. Das heißt, daß sich die Öffnungszeiten von Einlaßventilen und Auslaßventilen zu Beginn des Ansaugtaktes nicht überschneiden. Dies minimiert die Menge an Abgasen, welche durch die Bewegung der Kolben aus dem Abgaskrümmer in die Zylinder zurückgesaugt werden.

Zur Minimierung der rückgeführten Abgasmenge ist es ferner vorteilhaft, wenn beim Auslaufen der Brennkraftmaschine eine eventuell vorhandene externe Abgasrückführung unterbrochen wird.

Gemäß einer anderen Weiterbildung der Erfindung kann beim Auslaufen der Brennkraftmaschine oder danach (d.h. bei stillstehendem Verbrennungsmotor) dem Abgaskrümmer und/oder den Zylindern Frischluft zugeführt werden. Auf diese Weise wird dafür gesorgt, daß der Motor nicht nur von der Ansaugseite, sondern auch von der Abgasseite her mit Frischluft versorgt wird, und daß eventuell von der Abgasseite her in die Zylinder einströmendes Gas kein Abgas sondern Frischluft ist. Für die Zufuhr von Frischluft zum Abgassystem bietet sich dabei insbesondere das Sekundärluftsystem an, welches bei vielen Brennkraftmaschinen für die Kontrolle der Betriebsbedingungen eines Katalysators vorgesehen ist. Weiterhin kann mit der Pumpe des Sekundärluftsystems und/oder einer anderen Druck- oder Vakuumpumpe eine aktive Förderung von Frischluft in das Abgassystem erfolgen.

Gemäß einer anderen Ausgestaltung der Erfindung kann die Brennkraftmaschine nach dem Abstellen der Verbrennung (zum Beispiel durch Unterbrechung der Kraftstoffzufuhr und/oder Aussetzen der Zündungen) aktiv weitergedreht werden, um möglichst viel Frischluft in die Zylinder einzusaugen. Die aktive Weiterdrehung kann dabei unter Einsatz eines elektrischen, hydraulischen oder mechanischen Motors wie etwa des Anlassers oder eines Startergenerators erfolgen.

Die Erfindung betrifft weiterhin ein Verfahren zur Vorbereitung des Anlassens einer Brennkraftmaschine, vorzugsweise einer Brennkraftmaschine mit Direkteinspritzung, wobei die Kurbelwelle der Brennkraftmaschine beim Auslaufen gebremst wird und/oder die Kurbelwelle aktiv gedreht wird, um im abgestellten Zustand der Brennkraftmaschine eine vorgegebene Position der Kurbelwelle zu gewährleisten. Wie eingangs erläutert, ist es für ein starterloses, direktes Anlassen einer Brennkraftmaschine durch Kraftstoffzündungen in der Regel erforderlich, daß sich die Kolben in einer bestimmten Konfiguration (entsprechend einer bestimmten Winkelposition der Kurbelwelle) befinden. Das Verfahren ist dadurch gekennzeichnet, daß das Bremsen und/oder das aktive Drehen der Kurbelwelle durch Einsatz des Kompressors einer Klimaanlage (soweit vorhanden), durch Einsatz der Pumpe einer Servolenkung (soweit vorhanden), durch Einsatz einer Nokkenwellenverstelleinrichtung bei einer Brennkraftmaschine mit variabler Nockensteuerung und/oder durch Veränderung der Volumenarbeit der Brennkraftmaschine erfolgt.

Die Verwendung von Kompressor, Servolenkungspumpe oder Nockenwellenverstelleinrichtung zum Bremsen beziehungsweise Drehen des Verbrennungsmotors hat den Vorteil, daß die genannten Komponenten für ihren jeweiligen Zweck bereits vorhanden sind. Es ist daher nicht erforderlich, für das Bremsen beziehungsweise Weiterdrehen des Verbrennungsmotors eigene Einrichtungen vorzusehen.

Der Einsatz einer Nockenwellenverstelleinrichtung erfolgt vorzugsweise bei bereits stillstehender Brennkraftmaschine, wobei die Nockenwelle zusätzlich durch eine geeignete Maßnahme blockiert wird. Dies stellt sicher, daß die von der Nockenwellenverstelleinrichtung verursachte Relativbewegung zwischen Nockenwelle und Kurbelwelle vollständig in eine Drehung der Kurbelwelle überführt wird.

Die Veränderung der Volumenarbeit der Brennkraftmaschine kann die Ladungswechselarbeit, die Kompressionsarbeit und/oder die Expansionsarbeit betreffen. Eine Veränderung dieser Größen wirkt sich auf den Lauf der Brennkraftmaschine und damit die bei einem Stillstand angenommene Position aus. Vorzugsweise erfolgt die Veränderung der Volumenarbeit der Brennkraftmaschine durch eine Veränderung des Ansaugdruckes, welcher wiederum durch Verstellen einer im Ansaugkrümmer angeordneten Drosselklappe, durch Einstellen eines mit dem Ansaugkrümmer gekoppelten Frischluftkanals und/oder durch eine Variation der Nockensteuerung erfolgt.

Selbstverständlich ist es im Rahmen der vorliegenden Erfindung auch möglich und in der Regel angezeigt, verschiedene der oben genannten Maßnahmen zur Maximierung des erzielbaren Effektes zu kombinieren.

Die Erfindung betrifft ferner eine Brennkraftmaschine, welche zur Durchführung eines Verfahrens der vorstehend erläuterten Art eingerichtet ist. Insbesondere kann eine derartige Brennkraftmaschine eine Motorsteuerung aufweisen, die derart programmiert ist, daß diese bei einem Auslaufen der Brennkraftmaschine oder danach die erforderlichen Motorkomponenten wie Drosselklappe, Frischluftkanal, Nockenwellensteuerung, Blockiereinrichtung für die Nockenwelle, Abgasrückführung, Sekundärluftsystem, mit dem Verbrennungsmotor gekoppelte elektrische, mechanische oder hydraulische Motoren od. dgl. in einer Weise ansteuert, welche die Durchführung eines erfindungsgemäßen Verfahrens erlaubt.

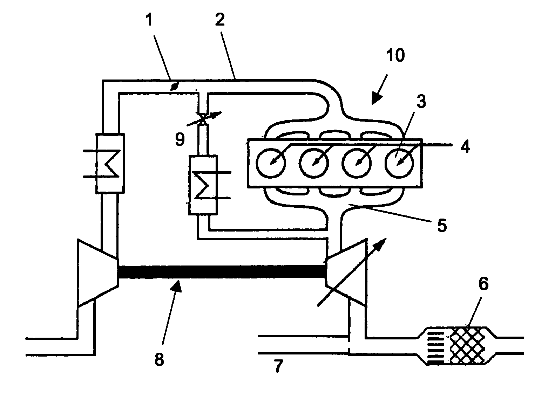

Die Erfindung wird nachfolgend anhand der Zeichnung beispielhaft näher erläutert.

Die einzige Figur zeigt schematisch die Komponenten einer Brennkraftmaschine, bei welcher das erfindungsgemäße Verfahren angewendet werden kann.

Bei der dargestellten Brennkraftmaschine 10 handelt es sich um einen Verbrennungsmotor mit direkter Einspritzung von Benzin über die in die Zylinder 3 führende Kraftstoffzufuhr 4. Ein solcher Motor mit Direkteinspritzung hat den Vorteil, daß er durch Zündung des Luft-Kraftstoff-Gemisches in den Zylindern 3 direkt gestartet werden kann, ohne daß ein zusätzlicher Startermotor die Kurbelwelle während einer Anlaßphase antreiben muß.

Die Brennkraftmaschine 10 weist ferner einen Ansaugkrümmer 2 zur Zufuhr von Frischluft auf, deren Zufuhrrate über die Drosselklappe 1 eingestellt werden kann. Die Abgase der Brennkraftmaschine 10 werden über den Abgaskrümmer 5 und einen in der Abgasleitung angeordneten Katalysator 6 abgeführt. Weiterhin ist in der Figur eine externe Abgasrückführung 9 mit einem AGR-Ventil (bzw. EGR-Ventil) erkennbar, über welche eine kontrollierte Rückführung von Abgasen von der Verbrennungsseite auf die Ansaugseite vorgenommen werden kann. Zur Erhöhung des Ladedruckes ist ferner ein Abgasturbolader 8 zwischen Abgasleitung und Frischluftzufuhr vorgesehen.

Damit das vorstehend beschriebene starterlose Anlassen der Brennkraftmaschine 10 erfolgreich durchgeführt werden kann, ist es erforderlich, daß die Zylinder zu Beginn des Startens in einer geeigneten Position stehen. Eine solche geeignete Position kann entweder dadurch sichergestellt werden, daß die Brennkraftmaschine beim vorangehenden Abstellen in dieser Position gestoppt wird, oder daß sie während oder nach dem Abstellen in diese Position aktiv weitergedreht wird.

Das Abstellen der Brennkraftmaschine 10 in einem gewünschten Kurbelwellenwinkelbereich kann beispielsweise durch folgende Maßnahmen erreicht werden:
- Durch eine zusätzliche elektrische, hydraulische oder mechanische Verzögerungseinrichtung wie beispielsweise eine Wirbelstrombremse, welche während des Anhaltens der Brennkraftmaschine in kontrollierter Weise auf die Kurbelwelle einwirkt;
- durch ein kontrolliertes Zünden der Brennkraftmaschine 10 weit bevor der obere Totpunkt des Kolbens in einem Zylinder 3 erreicht ist, um durch die "frühe Explosion" die Drehung der Kurbelwelle zu verlangsamen;
- durch Verwendung der Lichtmaschine (nicht dargestellt) als Bremse, um die Brennkraftmaschine in einem kontrollierten Kurbelwellenwinkelbereich anzuhalten;
- durch Verwendung des Kompressors der Klimaanlage (nicht dargestellt), um die Brennkraftmaschine in einem kontrollierten Kurbelwellenwinkelbereich anzuhalten;
- durch Verwendung der Pumpe der Servolenkung (nicht dargestellt), um die Brennkraftmaschine in einem kontrollierten Kurbelwellenwinkelbereich anzuhalten;
- durch Variation des Ansaugdruckes im Ansaugkrümmer 2 über ein definiertes Öffnen der Drosselklappe 1, um die Pumparbeit und Kompressionsarbeit zu kontrollieren;
- durch Variation des Ansaugdruckes im Ansaugkrümmer 2 über ein definiertes, alternierendes Öffnen und Schließen einer Klappe oder einer ähnlichen Einrichtung, die stromaufwärts im Einlaßsystem angeordnet ist (nicht dargestellt), um die Pump- und Kompressionsarbeit zu kontrollieren, wobei diese Klappe oder die ähnliche Einrichtung vorzugsweise ein oder mehrmals pro Zyklus geöffnet und geschlossen wird; und/oder
- durch Variation der Nockensteuerung vermöge einer variablen Nockenwellensteuerung, um die Ladungswechselarbeit, Kompressionsarbeit und Expansionsarbeit zu kontrollieren.

Eine Weiterdrehung der Brennkraftmaschine 10 nach ihrem Stillstand in einen geeigneten Kurbelwellenwinkelbereich ist beispielsweise über die folgenden Maßnahmen möglich:
- Durch Hinzufügung einer zusätzlichen elektrischen, hydraulischen oder mechanischen Einrichtung an der Kurbelwelle, um diese im gewünschten Winkelbereich zu positionieren;
- durch Verwendung eines herkömmlichen Anlassers und/oder der Lichtmaschine als Positionierungsmotor;
- durch Verwendung der Pumpe der Servolenkung (nicht dargestellt), die mit hydraulischer Energie versorgt wird, als Positionierungsmotor; und/oder
- durch Verwendung einer Nockenwellenverstelleinrichtung (nicht dargestellt), welche elektrisch oder hydraulisch aus einem Öldruckreservoir betrieben wird. Die Nockenwellenverstelleinrichtung bewirkt eine Relativdrehung zwischen Kurbelwelle und Nockenwelle. Vorzugsweise wird dabei an der BrennKraftmaschine eine zusätzliche Einrichtung vorgesehen (nicht dargestellt), welche die Drehung der Nockenwelle blockieren oder bremsen kann. Wenn diese Einrichtung aktiv ist, kann sich die von der Nockenwellenverstelleinrichtung bewirkte Relativdrehung nur noch auf die Kurbelwelle auswirken, so daß diese in die gewünschte Position bewegt werden kann.

Während die vorstehend erläuterten Maßnahmen dazu dienen, die Kurbelwelle der Brennkraftmaschine in eine für ein erneutes starterloses Anlassen geeignete Position zu bringen, können erfindungsgemäß weitere Maßnahmen zur Verbesserung der Ausgangsbedingungen für ein derartiges Anlassen eingeleitet werden. Insbesondere ist es möglich, dafür zu sorgen, daß beim erneuten Anlassen der Brennkraftmaschine 10 die in den Brennkammern befindliche Restmenge an Abgasen möglichst gering und dafür die Menge an Frischluft möglichst hoch ist. Die folgenden Maßnahmen können zur Erreichung dieser Ziele während des Auslaufens der Brennkraftmaschine 10 ergriffen werden:
- Ein kontrolliertes (vollständiges oder teilweises) Öffnen der im Ansaugkrümmer 2 angeordneten Drosselklappe 1, wenn ein Anhalten der Brennkraftmaschine 10 veranlaßt wird und während die Kraftstoffzufuhr 4 und die Funkenzündung abgestellt sind. Die abgestellte Brennkraftmaschine saugt auf diese Weise ein Maximum an Frischluft in die Zylinder und entfernt Restgase aus den Zylindern, während die Brennkraftmaschine ausläuft (d.h. während die Kurbelwelle von der Leerlaufdrehzahl auf den Stillstand abbremst). Vorzugsweise wird dabei die Drosselklappe 1 direkt nach dem Motorabstellen vollständig geöffnet, um die Zylinder mit Frischluft zu spülen. Kurz bevor die Kurbelwelle zu rotieren aufhört, wird die Drosselklappe 1 vorzugsweise wieder geschlossen, um ein ruhiges Anhalten der Brennkraftmaschine 10 zu ermöglichen;
- ein zusätzlicher Frischlufteinlaß (nicht dargestellt) zu den Zylindern 3, der mit dem Einlaßsystem oder der Umgebungsatmosphäre gekoppelt ist, kann bei Abstellen des Motors 10 geöffnet werden. Die Brennkraftmaschine 10 saugt dann während ihres Auslaufens (wenn die Kurbelwelle von der Leerlaufdrehzahl auf den Stillstand abbremst) ein Maximum an Frischluft in die Zylinder und entfernt auf diese Weise Restgase;
- Einstellung einer negativen Ventilüberschneidung mittels Einrichtungen zur variablen Nockenwellensteuerung und/oder Schließen des Ventils in der Abgasrückführung 9, wenn ein Anhalten der Brennkraftmaschine 10 veranlaßt wird. Auf diese Weise kann die abgestellte Brennkraftmaschine 10 während ihres Auslaufens nur ein Minimum an Restgasen aus dem Abgaskrümmer 5 ansaugen. Die Menge an Frischluft in den Zylindern bleibt daher maximal.
- Aktivierung eines Sekundärluftsystems, wenn ein Anhalten der Brennkraftmaschine veranlaßt wird. Ein derartiges Sekundärluftsystem 7 ist bei vielen Brennkraftmaschinen vorgesehen, um dem Katalysator 6 zur Optimierung seines Betriebes bei Bedarf zusätzliche Frischluft zuführen zu können. Die Aktivierung des Sekundärluftsystems stellt dem Abgassystem 5 Frischluft bereit, so daß die abgestellte Brennkraftmaschine 10 während ihres Auslaufens Frischluft nicht nur aus dem Einlaßkrümmer 2, sondern auch aus dem Abgassystem 5 ansaugen kann. Dieses Vorgehen wird vorteilhafterweise mit einer erhöhten Ventilüberschneidung und einem späten Schließen des oder der Auslaßventile kombiniert, um das Ansaugen der Frischluft zu maximieren.
- Die Pumpe des Sekundärluftsystems oder eine andere Druckpumpe oder Vakuumpumpe (zum Beispiel eine Vakuumpumpe für einen Bremskraftverstärker) können zur Bereitstellung zusätzlicher Frischluft an die Zylinder verwendet werden, wenn ein Motorstopp veranlaßt wird.

Die folgenden Maßnahmen können nach einem Stillstand und vor einem erneuten Starten der Brennkraftmaschine 10 eingesetzt werden, um die Frischluftmenge in den Zylindern zu erhöhen und die Abgasmenge zu verringern:
- Eine elektrisch, hydraulisch oder mechanisch angetriebene Druckpumpe (zusätzlich oder bereits vorhanden, zum Beispiel als Pumpe der Sekundärluft) oder Vakuumpumpe (zusätzlich oder bereits vorhanden, zum Beispiel als Vakuumpumpe für den Bremskraftverstärker), die mit Energie aus einem Speicher wie einer Batterie oder einem Druckreservoir versorgt wird, kann zur Bereitstellung zusätzlicher Frischluft an die Zylinder während des Stillstands des Motors 10 eingesetzt werden;
- unter Verwendung der Lichtmaschine als Motor oder eines anderen elektrischen, hydraulischen oder mechanischen Motors wie z.B. des Anlassers, der mit Energie aus einem Speicher wie einer Batterie oder einem Druckreservoir versorgt wird, kann die Brennkraftmaschine 10 angekurbelt werden, um zusätzliche Frischluft in die Zylinder anzusaugen.

Es versteht sich, daß die vorstehend erläuterten Maßnahmen nach Belieben miteinander kombiniert werden können (sofern sie sich nicht ausnahmsweise widersprechen), um die damit erzielbaren Effekte zu maximieren.

## Patentansprüche

1. Verfahren zum Anhalten und Anlassen einer Brennkraftmaschine (10), vorzugsweise einer Brennkraftmaschine mit Direkteinspritzung, umfassend die Schritte:
a) beim Auslaufen der Brennkraftmaschine (10) wird mindestens eine Maßnahme, welche die in den Zylindern (3) verbleibende Frischluftmenge und/oder Abgasmenge beeinflusst, so eingestellt, dass eine minimale Abgasmenge und/oder maximale Frischluftmenge in den Zylindern verbleibt;
b) Das nächste Anlassen der Brennkraftmaschine (10) erfolgt starterlos durch Auslösen einer Verbrennung in den Zylindern (3).

2. Verfahren nach Anspruch 1,
**dadurch gekennzeichnet, daß**
eine Drosselklappe (1) im Ansaugsystem (2) der Brennkraftmaschine (10) beim Auslaufen der Brennkraftmaschine geöffnet und vorzugsweise unmittelbar vor dem Stillstand der Brennkraftmaschine geschlossen wird und/oder dass ein mit den Zylindern (3) gekoppelter Frischluftkanal beim Auslaufen der Brennkraftmaschine geöffnet wird.

3. Verfahren nach Anspruch 1 oder 2,
**dadurch gekennzeichnet, daß**
beim Auslaufen der Brennkraftmaschine (10) eine negative Ventilüberschneidung eingestellt wird.

4. Verfahren nach mindestens einem der Ansprüche 1 bis 3,
**dadurch gekennzeichnet, daß**
beim Auslaufen der Brennkraftmaschine eine Abgasrückführung (9) unterbrochen wird.

5. Verfahren nach mindestens einem der Ansprüche 1 bis 4,
**dadurch gekennzeichnet, daß**
beim Auslaufen der Brennkraftmaschine (10) oder danach dem Abgaskrümmer (5) und/oder den Zylindern (3) Frischluft zugeführt wird, vorzugsweise über ein Sekundärluftsystem (7), eine Sekundärluftpumpe und/oder eine andere Pumpe.

6. Verfahren nach mindestens einem der Ansprüche 1 bis 5,
**dadurch gekennzeichnet, daß**
die Brennkraftmaschine (10) nach dem Abstellen der Verbrennung zum Ansaugen von Frischluft aktiv weitergedreht wird.

7. Verfahren, insbesondere nach mindestens einem der Ansprüche 1 bis 6, zur Vorbereitung des Anlassens einer Brennkraftmaschine (10), vorzugsweise einer Brennkraftmaschine mit Direkteinspritzung, wobei die Kurbelwelle beim Auslaufen der Brennkraftmaschine gebremst und/oder aktiv gedreht wird, um im abgestellten Zustand der Brennkraftmaschine eine vorgegebene Position anzunehmen,
**dadurch gekennzeichnet, daß**
das Bremsen und/oder aktive Drehen durch Einsatz des Kompressors einer Klimaanlage, durch Einsatz der Pumpe einer Servolenkung, durch Einsatz einer Nockenwellenverstelleinrichtung und/oder durch Veränderung der Volumenarbeit der Brennkraftmaschine erfolgt.

8. Verfahren nach Anspruch 7,
**dadurch gekennzeichnet, daß**
während der Aktivierung der Nockenwellenverstelleinrichtung die Nockenwelle blockiert wird.

9. Verfahren nach Anspruch 7 oder 8,
**dadurch gekennzeichnet, daß**
die Veränderung der Volumenarbeit der Brennkraftmaschine (10) mittels einer Veränderung des Ansaugdruckes erfolgt, vorzugsweise durch Verstellen der Drosselklappe (1), durch Einstellen eines mit dem Ansaugkrümmer (2) gekoppelten Frischluftkanals und/oder durch Variation der Nockensteuerung.

10. Brennkraftmaschine (10), vorzugsweise mit Direkteinspritzung,
**dadurch gekennzeichnet, daß**
diese zur Durchführung eines Verfahrens nach mindestens einem der Ansprüche 1 bis 9 ausgebildet ist.

## Claims

1. Method for stopping and starting an internal combustion engine (10), preferably an internal combustion engine with direct injection, comprising the steps:
a) during the run-down of the internal combustion engine (10), at least one measure influencing the fresh-air quantity and/or exhaust-gas quantity remaining in the cylinders is set such that a minimum exhaust-gas quantity and and/or maximum fresh-air quantity remains in the cylinders;
b) the next starting of the internal combustion engine (10) takes place, without starter, by the triggering of combustion in the cylinders (3).

2. Method according to Claim 1, **characterized in that** a throttle valve (1) in the intake system (2) of the internal combustion engine (10) is opened during the rundown of the internal combustion engine and is closed preferably directly before the standstill of the internal combustion engine, and/or **in that** a fresh air duct coupled to the cylinders (3) is opened during the rundown of the internal combustion engine.

3. Method according to Claim 1 or 2, **characterized in that** a negative valve overlap is set during the rundown of the internal combustion engine (10).

4. Method according to at least one of Claims 1 to 3, **characterized in that** exhaust gas recirculation (9) is interrupted during the rundown of the internal combustion engine.

5. Method according to at least one of Claims 1 to 4, **characterized in that**, during the rundown of the internal combustion engine (10) or thereafter, fresh air is supplied to the exhaust manifold (5) and/or to the cylinders (3), preferably via a secondary-air system (7), a secondary-air pump and/or another pump.

6. Method according to at least one of Claims 1 to 5, **characterized in that**, after combustion has been stopped, the internal combustion engine (10) is further rotated actively for the intake of fresh air.

7. Method, particularly according to at least one of Claims 1 to 6, for preparing for starting an internal combustion engine (10), preferably an internal combustion engine with direct injection, during the rundown of the internal combustion engine the crankshaft being braked and/or actively rotated, in order to assume a predetermined position when the internal combustion engine is in the switched-off state, **characterized in that** braking and/or active rotation takes place using the compressor of an air conditioning system, using the pump of a power steering system, using a camshaft adjustment device and/or by a variation in the work per unit volume of the internal combustion engine.

8. Method according to Claim 7, **characterized in that** the camshaft is blocked during the activation of the camshaft adjustment device.

9. Method according to Claim 7 or 8, **characterized in that** the variation in the work per unit volume of the internal combustion engine (10) takes place by means of a variation in the intake pressure, preferably owing to an adjustment of the throttle valve (1), owing to the setting of a fresh air duct coupled to the intake manifold (2) and/or owing to a variation in the cam control.

10. Internal combustion engine (10), preferably with direct injection, **characterized in that** it is designed for carrying out a method according to at least one of Claims 1 to 9.

## Revendications

1. Procédé pour arrêter et démarrer un moteur à combustion interne (10), de préférence un moteur à combustion interne avec injection directe, comprenant les étapes suivantes :
a) lors de la progression vers l'arrêt du moteur à combustion interne (10), au moins une mesure qui influence la quantité d'air frais et/ou de gaz d'échappement restant dans les cylindres (3) est ajustée de telle sorte qu'une quantité minimale de gaz d'échappement et/ou maximale d'air frais reste dans les cylindres ;
b) le démarrage suivant du moteur à combustion interne (10) s'effectue sans starter par déclenchement d'une combustion dans les cylindres (3).

2. Procédé selon la revendication 1,
**caractérisé en ce**
**qu'**un papillon (1) dans le système d'admission (2) du moteur à combustion interne (10) est ouvert lors de la progression vers l'arrêt du moteur à combustion interne et est de préférence immédiatement fermé avant l'immobilisation du moteur à combustion interne et/ou en ce qu'un canal d'air frais accouplé aux cylindres (3) est ouvert lors de la progression vers l'arrêt du moteur à combustion interne.

3. Procédé selon la revendication 1 ou 2,
**caractérisé en ce que**
lors de la progression vers l'arrêt du moteur à combustion interne (10), on ajuste un recoupement négatif des soupapes.

4. Procédé selon au moins l'une quelconque des revendications 1 à 3,
**caractérisé en ce que**
lors de la progression vers l'arrêt du moteur à combustion interne, on interrompt une recirculation des gaz d'échappement (9).

5. Procédé selon au moins l'une quelconque des revendications 1 à 4,
**caractérisé en ce que**
lors de la progression vers l'arrêt du moteur à combustion interne (10) ou ensuite, on achemine au collecteur de gaz d'échappement (5) et/ou aux cylindres (3) de l'air frais, de préférence par le biais d'un système d'air secondaire (7), d'une pompe d'air secondaire et/ou d'une autre pompe.

6. Procédé selon au moins l'une quelconque des revendications 1 à 5,
**caractérisé en ce que**
le moteur à combustion interne (10) après la coupure de la combustion continue de tourner activement pour l'aspiration d'air frais.

7. Procédé notamment selon au moins l'une quelconque des revendications 1 à 6, pour la préparation du démarrage d'un moteur à combustion interne (10), de préférence d'un moteur à combustion interne à injection directe, dans lequel le vilebrequin est freiné lors de la progression vers l'arrêt du moteur à combustion interne et/ou est tourné activement afin d'adopter dans l'état arrêté du moteur à combustion interne une position prédéfinie,
**caractérisé en ce que**
le freinage et/ou la rotation active s'effectuent en utilisant le compresseur d'une installation de climatisation, en utilisant la pompe d'une direction assistée, en utilisant un dispositif de réglage de l'arbre à cames et/ou en modifiant l'effort volumique du moteur à combustion interne.

8. Procédé selon la revendication 7,
**caractérisé en ce que**
pendant l'activation du dispositif de réglage de l'arbre à cames, on bloque l'arbre à cames.

9. Procédé selon la revendication 7 ou 8,
**caractérisé en ce que**
la modification de l'effort volumique du moteur à combustion interne (10) s'effectue au moyen d'une modification de la pression d'admission, de préférence par réglage du papillon (1), par ajustement d'un canal d'air frais accouplé au collecteur d'admission (2) et/ou par variation de la commande des cames.

10. Moteur à combustion interne (10), de préférence avec injection directe,
**caractérisé en ce que**
celui-ci est réalisé pour mettre en oeuvre un procédé selon au moins l'une quelconque des revendications 1 à 9.
